Europäisches Patentamt

(19) European Patent Office

Office européen des brevets

(11) Veröffentlichungsnummer: **0 053 251**
**B1**

# (12) EUROPÄISCHE PATENTSCHRIFT

(45) Veröffentlichungstag der Patentschrift:
16.05.84

(21) Anmeldenummer: 81108206.4

(22) Anmeldetag: 12.10.81

(51) Int. Cl.³: **C 02 F 11/14, B 01 D 37/00**

(54) Verfahren zum Entwässern von Klärschlämmen auf Filterpressen.

(30) Priorität: 29.11.80 DE 3045120

(43) Veröffentlichungstag der Anmeldung:
09.06.82 Patentblatt 82/23

(45) Bekanntmachung des Hinweises auf die Patenterteilung:
16.05.84 Patentblatt 84/20

(84) Benannte Vertragsstaaten:
AT BE CH DE FR GB IT LI NL SE

(56) Entgegenhaltungen:
AT - B - 241 373
AT - B - 247 804
AT - B - 349 399
DE - A - 2 327 869
DE - A - 2 732 018
DE - A - 2 920 350

(73) Patentinhaber: BASF Aktiengesellschaft,
Carl-Bosch-Strasse 38, D-6700 Ludwigshafen (DE)

(72) Erfinder: Sander, Bruno, Dr., Moerikestrasse 10,
D-6700 Ludwigshafen (DE)
Erfinder: Lauer, Herbert, Dr., Pfalzring 59,
D-6704 Mutterstadt (DE)
Erfinder: Neuwirth, Manfred, Thorner Strasse 2B,
D-6800 Mannheim (DE)

**0 053 251**

Mehrstufiges Verfahren zum Entwässern von Klärschlämmen auf Filterpressen

Die vorliegende Erfindung betrifft ein mehrstufiges Verfahren zum Entwässern von Klärschlämmen, deren organischer Anteil am Schlammfeststoff weniger als 70% beträgt und deren Entwässerungsverhalten durch Zugabe organischer Flockungsmittel verbessert worden ist, auf einer Filterpresse unter Verwendung inerter Zuschlagstoffe.

In Kläranlagen von Industrieunternehmen und in zentralen Großkläranlagen von Kommunen, in die größere Mengen gewerblicher Abwässer eingeleitet werden, wird es in zunehmendem Maße erforderlich, die anfallenden Klärschlämme durch Verbrennen zu beseitigen. Klärschlämme dieser Herkunft können Stoffe enthalten, die einer Unterbringung auf Deponien entgegenstehen. Eine umweltfreundliche und sichere Art der Beseitigung ist die totale Veraschung. Auch wegen stark gestiegener Transportkosten und wegen Raumnot auf den meisten Deponien wird eine Verbrennung der Klärschlämme angestrebt.

Eine wirtschaftliche Verbrennung ist nur durch eine möglichst hohe Aufkonzentrierung der Schlammfeststoffe erreichbar. Der spezifische Wassergehalt (kg Wasser/kg Schlammfeststoff) der zu verbrennenden Schlämme sollte möglichst gering sein.

Bei bekannten Verfahren werden die Schlämme auf Dekanter oder Siebbandpressen unter Verwendung organischer Flockungsmittel entwässert. In diesen Fällen muß zur weiteren Aufkonzentrierung der entwässerten Klärschlämme eine energiezehrende Trocknung nachgeschaltet werden, um eine wirtschaftliche Verbrennung durchführen zu können.

Auch bei dem verbreitetsten Entwässerungsverfahren, der einstufigen Entwässerung auf einer Kammerfilterpresse unter Verwendung von Eisensalzen und Kalk als Entwässerungshilfsmittel und unter Verwendung inerter Zuschlagstoffe, wie z. B. Asche, Sand, Steinmehl, werden Filterkuchen erzeugt, die als solche für eine Verbrennung nicht geeignet sind. Es müssen erhebliche Mengen Zusatzbrennstoffe wie Kohle und/oder Öl zugeschlagen werden. Außerdem stören die durch den Kalk hervorgerufenen Beläge und Verkrustungen an den Verbrennungseinrichtungen.

Nach einem anderen Entwässerungsverfahren (DE-A-2 920 350) ist eine weitergehende maschinelle Entwässerung von Klärschlämmen auf Kammerfilterpressen unter Verwendung organischer Flockungsmittel erreichbar. Die Klärschlämme werden unter definierten Bedingungen mit organischen Flockungsmitteln vorbehandelt, durch Schwerkraftfiltration von der Hauptmenge des Schlammwassers befreit und dann der Druckfiltration auf einer Kammerfilterpresse unterworfen. Durch die vorherige Aufkonzentrierung der Schlammfeststoffe bis in den Bereich von 10—20% erlangen die Schlammflocken eine für das Verfahren ausreichende mechanische Stabilität. Die Klärschlämme können ohne Schädigung gefördert, gepumpt und bis zu einem Preßdruck von 15 bar der Druckfiltration unterworfen werden. Die erzielten Schlammfeststoffgehalte liegen bei Klärschlämmen, die einen organischen Anteil am Schlammfeststoff von weniger als 65% besitzen, so hoch, daß die Heizwerte der Filterkuchen im Bereich der selbstgängigen Verbrennung liegen. Bei Klärschlämmen mit einem höheren Anteil organischer Substanz am Schlammfeststoff ist ein geringer Zusatz von Kohleschlamm erforderlich, um selbstgängig verbrennbare Filterkuchen zu erhalten. Bei diesem Verfahren ist es mitunter erforderlich, die Schichtdicken der Filterkammern zum Zwecke der Erzielung besonders hoher Schlammfeststoffgehalte zu vermindern.

Aus der Offenlegungsschrift DE-A-2 327 869 ist fernerhin eine Entwässerung in einer Kammerfilterpresse von mit einem organischen Flockungsmittel und Asche versetzten Schlamm bekannt. Als Ausgangsschlamm wird dabei ein eingedickter Frischschlamm mit einem Feststoffgehalt von 5 bis 10% verwendet. Der Zusatz eines inerten Zusatzstoffes nach der Flockungsmittelzugabe führt jedoch bei der beschriebenen einstufigen Entwässerung auf Filterpressen zu nicht voll befriedigenden Entwässerungsgraden.

Bei Schlammfeststoffgehalten im Filterkuchen von 28 bis 36% betragen die spezifischen Wassergehalte 3,6 kg bis 5,0 kg Wasser je kg Schlammfeststoff und die Heizwerte nur 78 kcal/kg bis 251 kcal/kg. Eine Verbrennung ist daher nur möglich, wenn erhebliche Mengen Brennstoff — Kohle oder Öl — zugegeben werden.

Schließlich ist aus der Patentschrift AT-B-241 373 ein Verfahren zum Reinigen anorganischer Abwässer bekannt, bei dem der in einer ersten Stufe geflockte Schlamm durch Hinzufügen von Beschwerungsmitteln wie Zement und Gips und weitere Zugabe von organischen Flockungsmitteln höher aufkonzentriert und deponiefähig gemacht wird. Im Gegensatz zu anorganischen Abwässern zeigen jedoch die im wesentlichen organische Bestandteile enthaltenden Klärschlämme ein völlig andersartiges Verhalten, so daß eine unveränderte Übertragung der Lehre der Patentschrift AT-B-241 373 auf die eingangs genannten Klärschlämme nicht zum Erfolg führt, d. h. es würde ein Schlamm-Konzentrat entstehen, das für Verbrennungsvorgänge ungeeignet ist.

Aufgabe der Erfindung war es demnach, ein Entwässerungsverfahren zu erarbeiten, das die vorgenannten Nachteile nicht besitzt, und bei dem durch einfachere und zweckdienlichere Maßnahmen die erforderliche Aufkonzentrierung der Schlammfeststoffe bis über 10% erreicht werden kann. Ziel ist daher, stabile Schlammflocken zu erzeugen, so daß die Druckfiltration auf einer Filterpresse direkt vorgenommen und die vorgeschaltete Schwerkraftfiltration eingespart werden kann. Die Filterkuchen sollen selbstgängig verbrennbar sein.

Eine weitere Aufgabe der Erfindung besteht darin, ein Entwässerungsverfahren zu erarbeiten, das Filterkuchen liefert, deren gesamter Wärmeinhalt bei einer Verbrennung in einem Kraftwerk anstelle von Primärenergieträgern in Strom und Dampf umgewandelt werden kann.

Diese Aufgaben wurden erfindungsgemäß dadurch gelöst, daß man die Klärschlämme durch einen Zusatz organischer Flockungsmittel bereits bei der Eindickung durch Schwerkraftsedimentation von 0,5 bis 5,0 Gew.-% Schlammfeststoff bis in den Bereich von 6—14 und insbesondere 8—12 Gew.-% Schlammfeststoff aufkonzentriert, die Klärschlämme mit Zuschlagstoffen, wie feinteiligen Kohlen oder Aschen oder deren Gemischen, in einer Menge von 0,5 bis 1,5 Gewichtsteilen je Gewichtsteil Schlammfeststoff vermischt, die Klärschlämme vor, während oder nach dem Einmischen der Zuschlagstoffe mit weiteren Mengen im Bereich von 2—8 kg organischer Flockungsmittel/t Schlammfeststoff behandelt und dann auf der Filterpresse zur Herstellung von Filterkuchen, die unter Wärmenutzung verbrannt werden können, entwässert.

Nach einer besonderen Ausbildung der Erfindung erfolgt die Behandlung der Klärschlämme mit weiteren Mengen organischer Flockungsmittel vor dem Einmischen der Zuschlagstoffe, und zwar in der Weise, daß die Klärschlämme in einem Rührbehälter innerhalb von 1—3 Minuten bei Rührerdrehzahlen von 5—50 min$^{-1}$ mit der Flockungsmittellösung vermischt werden, oder, daß die Klärschlämme in statischen Rohrmischern, die in ihrem Innern Wendeln besitzen, in weniger als 1 Minute mit der Flockungsmittellösung in Kontakt gebracht werden.

Gemäß einer weiteren Ausbildung der Erfindung kann die Behandlung der Klärschlämme mit weiteren Mengen organischer Flockungsmittel auch gleichzeitig mit dem Einmischen der Zuschlagstoffe in einem Mischer innerhalb von 1—5 Minuten und bei Rührerdrehzahlen von 5—50 min$^{-1}$ erfolgen.

Als organische Flockungsmittel für das erfindungsgemäße Verfahren werden Flockungsmittelmischungen eingesetzt, die aus einem Flockungsmittel mit 30—40%iger kationischer Modifizierung und aus einem Flockungsmittel mit 70—90%iger kationischer Modifizierung bestehen und deren Mischungsverhältnis 1 : 3 bis 3 : 1 bevorzugt 1 : 1 beträgt.

Unter Klärschlämmen sollen verstanden werden: Primärschlämme, die in der Vorklärstufe einer Kläranlage durch Sedimentation erhalten werden, Mischschlämme, die eine Abmischung von Belebtschlämmen (Überschußschlämmen) aus biologischen Kläranlagen mit Primärschlämmen darstellen, Faulschlämme, mineralisierte Schlämme, die z. B. durch Langzeitbelüftung bei Umgebungstemperatur entstehen. Die Schlämme können kommunaler, industrieller oder gemischter Herkunft sein.

Diese Klärschlämme besitzen an ihrem Entstehungsort einen Schlammfeststoffgehalt von 0,5—5,0%. Der organische Anteil (oTS) am Schlammfeststoff beträgt in der Regel weniger als 70%. Solche Klärschlämme können durch organische Flockungsmittel bis in den Bereich von 6—14% und insbesondere von 8—12 Gew.-% Feststoff durch Schwerkraftsedimentation in den Eindickern einer Kläranlage aufkonzentriert werden. Es erfolgt demnach nicht nur eine Sedimentationsbeschleunigung, sondern auch eine beträchtliche Erhöhung des Eindickgrades.

Als organische Flockungsmittel können handelsübliche Marken eingesetzt werden. Hierbei handelt es sich um wasserlösliche, makromolekulare Verbindungen, die durch Polymerisation oder durch Copolymerisation von Acrylamid, von Acrylsäure und/oder ihren Salzen oder von Estern der Acrylsäure bzw. Methacrylsäure, die über ihre Alkoholkomponente speziell modifiziert worden sind. Diese Flockungsmittel unterscheiden sich außerdem noch durch ihre unterschiedliche elektrische Ladung (kationisch, anionisch oder elektroneutral) und durch ihren Polymerisationsgrad.

Die Auswahl eines geeigneten Flockungsmittels nach Art und Menge erfolgt nach bekannten Methoden bereits im Labormaßstab.

Für die Eindickung kommen anionische oder kationische Flockungsmittel in Betracht. Sie werden in einer Menge von 0,5—2,0 kg Wirkstoff/t Schlammfeststoff eingesetzt.

Die Vorauswahl der organischen Flockungsmittel, die für die durchgreifende Verbesserung des Entwässerungsverhaltens der erfindungsgemäßen Schlammgemische eingesetzt werden sollen, erfolgte nach den Methoden, die in der DE-A-2 837 017 beschrieben worden sind.

Gemäß der Aufgabe der Erfindung müssen bei der Flockungsreaktion Schlammflocken entstehen, die eine besonders hohe mechanische Stabilität besitzen.

Es wurde überraschend gefunden, daß Mischungen von organischen Flockungsmitteln, die aus einem Flockungsmittel mit 30—40%iger kationischer Modifizierung und aus einem Flockungsmittel mit 70—90%iger kationischer Modifzierung bestehen, besonders mechanisch stabile Schlammflocken liefern. Das Mischungsverhältnis kann im Bereich 1 : 3 bis 3 : 1 schwanken. Bevorzugt wird jedoch ein Mischungsverhältnis von 1 : 1. Die erforderlichen Flockungsmittelmengen liegen im Bereich von 2—8 kg Wirkstoff/t Schlammfeststoff. Sie sind abhängig von der Art des jeweiligen Schlamms und von der Feststoffkonzentration.

Die Flockungsmittel werden in Form ihrer 0,05—0,2%igen wäßrigen Lösungen eingesetzt. Die Herstellung solcher verdünnter Flockungsmittellösungen aus den festen und flüssigen Handelsprodukten erfolgt nach bekannten Methoden in handelsüblichen Vorrichtungen.

Die Flockungsmittellösungen werden direkt in die Schlammleitung nach der Schlammpumpe zudosiert. Hierbei können Eintragshilfen, wie z. B. ein Kegelmischer oder ein statischer Mischer, mit geringem Querschnitt vorteilhaft sein.

3

Bei dem erfindungsgemäßen Verfahren werden den eingedickten Klärschlämmen Zuschlagstoffe, wie feinteilige Kohlen und Aschen, zugefügt.

Als feinteilige Kohlen kommen in Betracht: Feinkohlen, die bei der Trennung von Feinkohle und Gangart (Berge) durch Flotation und nachfolgender Entwässerung gewonnen werden. Auch Kohleschlämme, die bei Naßaufbereitungsverfahren entstehen, sind geeignet. Ferner können Siebfraktionen von Kraftwerkskohlen oder von Grünkoks aus Raffinerien bis zu einer Korngröße von 1 mm verwendet werden.

Als weitere Zuschlagstoffe werden Aschen der verschiedensten Herkunft verwendet. Besonders wirtschaftlich ist die Verwendung von Aschen, die bei der Müllverbrennung oder bei der Verbrennung der Klärschlämme anfallen. Hierbei ist zu beachten, daß die Aschen möglichst kalkfrei sind und einen pH-Wert von 6 bis höchstens 8 besitzen. Eine Asche, deren pH-Wert größer als 8 beträgt, beeinflußt die nachfolgende Flockungsreaktion nachteilig.

Die Zusatzmengen der Zuschlagstoffe hängen von der jeweiligen Zielsetzung ab. Für den Fall, daß selbstgängig verbrennende Filterkuchen erzeugt werden sollen, liegen die Mengenverhältnisse von Schlammfeststoff (STS) : Kohlefeststoff (KTS) : Asche (A) im Bereich von 1 : 0,2 : 0,3 bis 1 : 0,5 : 1,0.

Werden Filterkuchen angestrebt, die als Brennstoff für Kraftwerke geeignet sind, d. h. wenn die Filterkuchen einen besonders hohen Heizwert haben sollen und die spezifischen Wassergehalte ein Minimum aufweisen sollen, dann wird auf einen Aschezusatz verzichtet und nur feinteilige Kohle zugeschlagen. Als besonders günstig erwiesen sich Mischungsverhältnisse im Bereich von STS : KTS = 1 : 1,2 bis 1 : 1,5.

Die Zuschläge werden in den Klärschlämmen mit Hilfe von Mischwerken homogen verteilt. Diese können absatzweise oder kontinuierlich betrieben werden. Die Verweilzeit in den Mischern beträgt 1 bis 5 Minuten. Die Rührerdrehzahlen liegen im Bereich von 5 bis 50 min⁻¹.

Die Behandlung der Klärschlämme mit weiteren Mengen organischer Flockungsmittel kann wegen der besonders hohen mechanischen Stabilität der Schlammflocken, die bei Anwendung der erfindungsgemäßen Flockungsmittelgemische erzielt wird, bereits vor dem Einmischen des Zuschlagstoffes vorgenommen werden. Es wurde überraschend gefunden, daß bei dieser Verfahrensweise die Schlammgemische ihre höchste Entwässerbarkeit bei der Druckfiltration auf der Filterpresse erlangen.

Die Vorbehandlung der eingedickten Klärschlämme mit den wäßrigen 0,05—0,2%igen Flockungsmittellösungen kann in einem vertikal von unten nach oben durchströmten Rührbehälter (dynamischer Flockungsreaktor) innerhalb von 1—3 Minuten bei Rührerdrehzahlen von 5—50 min⁻¹ erfolgen. Die Flockungsreifezeiten und der günstigste Energieeintrag kann nach der in der DE-A-2 920 434 beschriebenen Methode ermittelt werden.

Diese Vorbehandlung kann ebenso erfolgreich in statischen Rohrmischern, die in ihrem Innern Wendeln besitzen, durchgeführt werden. Die Flockungsreifezeiten betragen in diesem Falle wegen der besonderen hydraulischen Verhältnisse weniger als 1 Minute. In der Regel werden mehrere Mischerelemente hintereinander geschaltet. Diese Mischstrecke (statischer Flockungsreaktor) ist dann Bestandteil der Schlammleitung.

Nach einer anderen Ausführungsform kann die Behandlung der Klärschlämme mit weiteren Mengen organischer Flockungsmittel gleichzeitig mit dem Einmischen der Zuschlagstoffe in einem Mischwerk innerhalb von 1—5 Minuten und bei Rührerdrehzahlen von 5—50 min⁻¹ erfolgen. In diesem Falle dient der Mischer ebenfalls als Flockungsreaktor. Die für die Flockung erforderliche Flockungsreifezeit und der notwendige Energieeintrag können bei dieser Arbeitsweise erreicht werden. Durch diese Art der Vorbehandlung werden bei einigen Schlammischungen bei der Druckfiltration auf Filterpressen ebenso günstige Entwässerungseffekte erzielt, wie bei der vorher beschriebenen Arbeitsweise.

Die geflockten Schlammgemische, welche die Zuschlagstoffe enthalten, werden in einem Zwischenbehälter, der als Mengenpuffer dient, gesammelt und von hier aus in die Filterpressen gefördert.

Als Filterpressen kommen Kammerfilterpressen, Rahmenfilterpressen oder Membranfilterpressen in Betracht. Bei Verwendung von Zuschlagstoffen in einer Menge von 0,5—1,5 Gewichtsteilen je Gewichtsteil Schlammfeststoff kann auch in größeren Schichtdicken bis zu 40 mm gepreßt werden. Dies ist ein Vorteil des erfindungsgemäßen Verfahrens, da jetzt auch bei Verwendung organischer Flockungsmittel als Entwässerungshilfsmittel anstelle von Eisensalzen und Kalk in größeren Schichtdicken gearbeitet werden kann.

Die Preßzeiten liegen im Bereich um 90—180 Minuten. Es werden Preßdrücke bis 15 bar angewandt. Bei Einhaltung der erfindungsgemäßen Maßnahmen lösen sich die Preßkuchen einwandfrei von den Filtertüchern ab, so daß ein selbsttätiger Abwurf erfolgen kann.

Die erzielten Feststoffgehalte in den Preßkuchen lagen überraschend hoch:

Bei der Verfahrensweise, bei der den Klärschlämmen feinteilige Kohlen in den Mengenverhältnissen von STS : KTS = 1 : 1,2 bis 1 : 1,5 zugeschlagen werden, können Feststoffgehalte in den Preßkuchen von 55—65% erreicht werden. Die spezifischen Wassergehalte der Preßkuchen liegen im Bereich von 1,4—1,6 kg : kg STS. Die Heizwerte betragen 9200 bis 14 600 kJ/kg (2200—3500 kcal/kg). Aufgrund der hohen Heizwerte und der niedrigen spezifischen Wassergehalte sind diese Preßkuchen als Brennstoff für Kraftwerke geeignet.

Die besonderen Vorteile dieser Verfahrensvariante bestehen darin, daß einerseits die feinteilige Kohle, die zunächst als Filterhilfsmittel diente, in vollem Umfang als Primärenergieträger eingesetzt werden kann. Andererseits kann auch der gesamte Wärmeinhalt der Klärschlämme aus dem organischen Anteil des Schlammfeststoffs (oTS) zur Gewinnung von Strom und Dampf ausgenutzt werden. Diese Verfahrensvariante ist von besonderer Bedeutung für kommunale Großkläranlagen, da kommunale Klärschlämme besonders energiereich sind und günstige Voraussetzungen für die Verbrennung liefern.

Bei der Verfahrensvariante, bei der den Klärschlämmen feinteilige Kohlen und Aschen in den Mengenverhältnissen von STS : KTS : A = 1 : 0,2 : 0,3 bis 1 : 0,5 : 1,0 zugeschlagen werden, können Feststoffgehalte in den Preßkuchen von 50—60% erhalten werden. Die spezifischen Wassergehalte der Preßkuchen liegen im Bereich von 1,3 bis 1,8 kg/kg STS. Die Heizwerte betragen 4600—6300 kJ/kg (1100—1500 kcal/kg). Diese Preßkuchen können selbstgängig in Wirbel- oder Etagenöfen verbrannt werden.

Diese Verfahrensvariante gestattet eine kostengünstige Beseitigung der Klärschlämme bei minimalem Energieeinsatz, wenn eine Verbrennung in einem Kraftwerk unter Energiegewinnung nicht möglich ist.

Der Vorteil dieser Variante des erfindungsgemäßen Verfahrens gegenüber den Verfahren nach dem Stande der Technik besteht darin, daß durch die weitergehende mechanische Entwässerung unmittelbar selbstgängig verbrennbare Filterkuchen erzeugt werden. Eine energieaufwendige Trocknung der entwässerten Klärschlämme oder ein Zusatz von größeren Mengen feinteiliger Kohle und/oder Heizöl ist daher nicht mehr erforderlich. Durch das erfindungsgemäße Verfahren wird demnach ein nutzbarer Primärenergieträger aus den Klärschlämmen gewonnen oder Primärenergie bei der Beseitigung der Schlämme eingespart. Bei der Verbrennung in Wirbelöfen wird eine höhere Betriebssicherheit durch die kalkfreie Fahrweise erreicht. In Folge der hohen Volumenreduzierung ist eine bessere Kapazitätsausnutzung bei den Entwässerungs- und Verbrennungsvorrichtungen möglich.

Die Erfindung wird nachfolgend anhand von Beispielen näher erläutert. Die dort angegebenen Prozentzahlen sind immer Gewichtsprozente.

Bei den Beispielen 1—5 wurde ein Mischschlamm aus einer mechanisch biologischen Kläranlage verwendet, der aus 80 Teilen Belebtschlamm und aus 20 Teilen Primärschlamm besteht und dessen organischer Anteil am Schlammfeststoff 65% beträgt. Der Mischschlamm wurde in einem Rundeindikker durch Zugabe einer 0,2%igen wäßrigen Lösung eines Flockungsmittels mit 40%iger anionischer Modifizierung in einer Menge von 1 kg Wirkstoff/t Schlammfeststoff aufkonzentriert. Der Feststoffgehalt des eingedickten Mischschlamms betrug 9,5%.

## Beispiel 1

### Flockung

In dem oben charakterisierten Mischschlamm wurde mit Hilfe eines Kegelmischers, der in die Schlammleitung eingebaut wurde, eine 0,2%ige wäßrige Lösung eines Flockungsmittel-Gemisches, das aus gleichen Teilen eines organischen Flockungsmittels mit 40%iger kationischer Modifizierung und eines organischen Flockungsmittels mit 90%iger kationischer Modifizierung besteht, verteilt. Die gesamte Zugabemenge an organischen Flockungsmitteln betrug 6,6 kg Wirkstoff/t Schlammfeststoff.

Der das Flockungsmittelgemisch enthaltende Mischschlamm wurde dann 2 Minuten lang in einem vertikal durchströmten zylindrischen Behälter unter Rühren behandelt. Die Rührerdrehzahl des verwendeten Schneckenrührers betrug 20 min$^{-1}$.

### Konditionierung

Danach wurde dem geflockten Schlamm in einem Doppelwellenmischer innerhalb von 4 Minuten und bei einer Rührerdrehzahl von 20 min$^{-1}$ eine 50%ige wäßrige Suspension von Kohleschlamm und Klärschlammasche zugegeben, und zwar in der Menge, daß das Verhältnis von STS : KTS : A wie 1 : 0,3 : 0,6 beträgt. Der Heizwert des Trockenstoffgehalts des eingesetzten Kohleschlamms beträgt 23 000 kJ/kg (5500 kcal/kg). Der gesamte Feststoffgehalt dieses Schlammgemisches betrug 12,6%.

### Druckfiltration

Der geflockte und konditionierte Schlamm wird in einen Sammelbehälter gegeben und von dort mit Hilfe von Kolbenmembranpumpen in eine Kammerfilterpresse gefördert, deren Plattenabstand 33 mm betrug. Die Druckfiltration erfolgte bis zu einem Enddruck von 15 bar. Die Preßzeit betrug 150 min. Die Preßkuchen lösen sich selbsttätig von den Filtertüchern ab.

Daten der Preßkuchen
| | |
|---|---|
| Feststoffgehalt: | 58,5% |
| spez. Wassergehalt: | 1,35 kg Wasser/kg STS |
| Heizwert $H_U$: | 5605 kJ/kg (1341 kcal/kg) |

**0 053 251**

Die Preßkuchen konnten in einem Wirbelofen selbstgängig verbrannt werden.

### Beispiel 2

Es wurde wie in Beispiel 1 angegeben verfahren, jedoch erfolgte der Zusatz der 0,2%igen wäßrigen Flockungsmittellösung gleichzeitig mit dem Einmischen der Zuschlagstoffe in dem Doppelwellenmischer unter denselben Bedingungen.

Nach der Druckfiltration auf der Kammerfilterpresse erfolgte ein glatter Abwurf der Preßkuchen.

Daten der Preßkuchen

| | |
|---|---|
| Feststoffgehalt: | 56,2% |
| spez. Wassergehalt: | 1,47 kg Wasser/kg STS |
| Heizwert $H_U$: | 5321 kJ/kg (1173 kcal/kg) |

Die Preßkuchen konnten in einem Wirbelofen ohne Zusatzbrennstoff verbrannt werden. Dieses Beispiel zeigt, daß auch bei der vereinfachten Verfahrensweise die Aufgabe gemäß Erfindung erreicht werden kann.

### Beispiel 3

#### Flockung

In dem Mischschlamm wurde mit Hilfe eines Kegelmischers eine 0,1%ige wäßrige Lösung eines Flockungsmittelgemisches, das aus einem Teil eines organischen Flockungsmittels mit 40%iger kationischer Modifizierung und aus 2 Teilen eines organischen Flockungsmittels mit 90%iger kationischer Modifizierung besteht, verteilt. Die gesamte Zugabemenge an organischen Flockungsmitteln betrug 5,8 kg Wirkstoff/t STS. Danach durchströmte der das Flockungsgemisch enthaltende Schlamm eine Mischstrecke, die aus mehreren hintereinandergeschalteten statischen Rohrmischern (Fabrikat Kenics) bestand. Die Verweilzeit in dieser Mischstrecke betrug 30 Sekunden.

#### Konditionierung

Der geflockte Schlamm wurde dann in einem Doppelwellenmischer innerhalb von 3 Minuten und bei einer Rührerdrehzahl von 25 min$^{-1}$ mit feinteiliger Kohle versetzt. Das Mengenverhältnis von STS : KTS betrug 1 : 1,3. Die feinteilige Kohle war ein Flotationskonzentrat, das einen Heizwert von 31 000 kJ/kg (7400 kcal/kg) besitzt.

Der gesamte Feststoffgehalt dieses Schlammgemisches betrug 13%.

#### Druckfiltration

Die Druckfiltration erfolgte wie in Beispiel 1 beschrieben. Die Preßzeit betrug 150 min. Die Preßkuchen waren trocken und lösten sich einwandfrei von den Filtertüchern ab.

Daten der Preßkuchen

| | |
|---|---|
| Feststoffgehalt: | 61,8% |
| spez. Wassergehalt: | 1,42 kg Wasser/kg STS |
| Heizwert $H_U$: | 13 800 kJ/kg (3300 kcal/kg) |

Der Heizwert liegt im Bereich einer guten Braunkohle ($H_U$: 2500—3500 kcal/kg). Die Preßkuchen konnten in einem Kraftwerkskessel unter Gewinnung von Sekundärenergie (Strom und Dampf) verfeuert werden.

### Beispiel 4

Es wurde wie in Beispiel 3 angegeben verfahren, jedoch erfolgte der Zusatz der 0,1%igen wäßrigen Flockungsmittellösung gleichzeitig mit dem Einmischen der feinteiligen Kohle in dem Doppelwellenmischer unter denselben Bedingungen.

Nach der Druckfiltration auf der Kammerfilterpresse konnten die Preßkuchen selbsttätig abgeworfen werden.

Daten der Preßkuchen

| | |
|---|---|
| Feststoffgehalt: | 59,2% |
| spez. Wassergehalt: | 1, 58 kg Wasser/kg STS |
| Heizwert $H_U$: | 13 108 kJ/kg (3136 kcal/kg) |

6

**0 053 251**

Auch diese Preßkuchen konnten in einem Kraftwerk verfeuert werden.

Beispiel 5

Flockung

In dem Mischschlamm wurde mit Hilfe eines Kegelmischers eine 0,1%ige wäßrige Lösung eines Flockungsmittelgemisches, das aus gleichen Teilen eines organischen Flockungsmittels mit 30%iger kationischer Modifizierung und eines organischen Flockungsmittels mit 90%iger kationischer Modifizierung besteht, verteilt. Die gesamte Zugabemenge an organischen Flockungsmitteln betrug 5,5 kg Wirkstoff/t STS. Der das Flockungsmittelgemisch enthaltende Schlamm wurde dann 3 Minuten lang in einem vertikal durchströmten zylindrischen Behälter unter Rühren behandelt. Die Rührerdrehzahl des Schneckenrührers betrug 15 min$^{-1}$.

Konditionierung

Danach wurde dem geflockten Schlamm in einem Doppelwellenmischer innerhalb von 3 Minuten und bei einer Rührerdrehzahl von 25 min$^{-1}$ eine 50%ige wäßrige Suspension von Kohleschlamm, der bereits im Beispiel 1 verwendet wurde, zugegeben. Die Zugabemenge wurde so gewählt, daß das Mengenverhältnis von STS : KTS = 1 : 1,4 betrug.
Der gesamte Feststoffgehalt des Schlammgemisches betrug 13,0%.

Druckfiltration

Die Druckfiltration erfolgte wie in Beispiel 1 beschrieben. Die Preßzeit betrug 160 min. Die Preßkuchen können selbsttätig abgeworfen werden.

Daten der Preßkuchen

| | |
|---|---|
| Feststoffgehalt: | 60,4% |
| spez. Wassergehalt: | 1,57 kg Wasser/kg STS |
| Heizwert $H_U$: | 10 809 kJ/kg (2586 kcal/kg) |

Zur Ermittlung des günstigsten Zugabeortes der organischen Flockungsmittel für die erfindungsgemäße Entwässerung im Laborversuch wurde an fünf aufeinanderfolgenden Tagen ein Mischschlamm verwendet, der nach Herkunft, Zusammensetzung und Eindickbedingungen dem Mischschlamm, der in den Beispielen 1 bis 5 verwendet wurde, entspricht. Der Feststoffgehalt der eingedickten Mischschlammproben lag im Bereich von 8,9—9,2% und der organische Anteil an Schlammfeststoff lag im Bereich von 64,2—65,8%.
Die Schlammvorbehandlung erfolgte jeweils nach 3 Methoden:

Methode A

500 ml Mischschlamm werden in ein 1 l-Becherglas (hohe Form) gegeben. Dann wird unter Rühren bei 50 min$^{-1}$ mit einem Blattrührer eine 0,2%ige wäßrige Flockungsmittellösung innerhalb von 10 Sekunden zugegeben. Der geflockte Schlamm wird noch 120 Sekunden lang bei der angegebenen Rührerdrehzahl behandelt.
Anschließend wird die Rührerdrehzahl auf 200 min$^{-1}$ erhöht, und es werden die jeweiligen Zuschlagstoffe (feinteilige Kohlen, Aschen) in den angegebenen Mengen innerhalb von 30 Sekunden zugegeben. Die gesamte Mischzeit beträgt 3 Minuten.

Methode B

500 ml Mischschlamm werden in ein 1 l-Becherglas gegeben. Dann werden unter Rühren bei einer Rührerdrehzahl von 200 min$^{-1}$ gleichzeitig Zuschlagstoffe und Flockungsmittellösung innerhalb von 30 Sekunden zugegeben. Die gesamte Mischzeit beträgt 3 Minuten.

Methode C

500 ml Mischschlamm werden in ein 1 l-Becherglas gegeben. Unter Rühren bei einer Rührerdrehzahl von 200 min$^{-1}$ werden nacheinander die Zuschlagstoffe innerhalb von 30 Sekunden zugegeben. Die gesamte Mischzeit beträgt 3 Minuten.
Danach wird die Rührerdrehzahl auf 50 min$^{-1}$ zurückgenommen, und es wird die Flockungsmittellösung innerhalb von 10 Sekunden hinzugefügt. Das geflockte Schlammgemisch wird noch 120 Sekunden bei der angegebenen Rührerdrehzahl behandelt.

7

Die Rührerdrehzahlen wurden beim Untermischen der Zuschlagstoffe gegenüber den Praxisversuchen in den Beispielen 1 bis 5 erhöht, damit ein vergleichbarer Energieeintrag erfolgt.

Die Schlammproben, die nach den Methoden A, B und C vorbehandelt worden sind, wurden unmittelbar der Druckfiltration auf einer Laborpresse unterworfen. Es wurde 1 Minute lang bei wachsendem Druck und 2 Minuten bei einem konstanten Druck von 10 bar entwässert.

## Vergleichsbeispiel 1

Bei diesen Versuchen wurden den Mischschlammproben feinteilige Kohle (ein Kohleschlamm in Form einer 50%igen wäßrigen Suspension) und Klärschlammasche zugegeben. Das Mengenverhältnis von STS : KTS : A betrug in allen Fällen 1 : 0,3 : 0,6.

Als Flockungsmittellösung wurde eine 0,2%ige wäßrige Lösung eines Flockungsmittelgemisches, das aus gleichen Teilen eines organischen Flockungsmittels mit 40%iger kationischer Modifizierung und eines organischen Flockungsmittels mit 90%iger kationischer Modifizierung besteht, verwendet. Die gesamte Zugabemenge an organischem Flockungsmittel betrug 6,5 g Wirkstoff/kg STS.

Folgende Entwässerungsgrade (Feststoffgehalt der Preßkuchen) wurden nach der Druckfiltration ermittelt:

|            | Mittelwert ($\bar{x}$) | Standardabweichung (s) |
|------------|------------------------|------------------------|
| Methode A  | 55,8%                  | 0,5                    |
| Methode B  | 55,0%                  | 1,6                    |
| Methode C  | 52,8%                  | 2,9                    |

## Vergleichsbeispiel 2

Bei dieser Versuchsreihe wurde dem Mischschlamm als Zuschlagstoff ein Flotationskonzentrat zugegeben. Das Mengenverhältnis von STS : KTS betrug 1 : 1,3.

Als Flockungsmittellösung wurde eine 0,2%ige wäßrige Lösung eines Flockungsmittelgemisches, das aus einem Teil eines organischen Flockungsmittels mit 40%iger kationischer Modifizierung und aus 2 Teilen eines organischen Flockungsmittels mit 90%iger kationischer Modifizierung besteht, verwendet. Die gesamte Zugabemenge an organischen Flockungsmitteln betrug 5,8 g Wirkstoff/kg STS.

Es wurden folgende Feststoffgehalte der Preßkuchen nach der Druckfiltration ermittelt:

|            | Mittelwert ($\bar{x}$) | Standardabweichung (s) |
|------------|------------------------|------------------------|
| Methode A  | 58,1%                  | 1,1                    |
| Methode B  | 57,5%                  | 2,5                    |
| Methode C  | 56,2%                  | 2,8                    |

Die Vergleichsbeispiele 1 und 2 zeigen, daß bei der erfindungsgemäßen Zugabe der Flockungsmittel vor oder während des Einmischens der Zuschlagstoffe die günstigsten Entwässerungseffekte mit den geringsten Schwankungsbreiten erzielt werden.

## Beispiele 6 und 7

### (Verwendung von Grünkoks und Kraftwerkskohle)

Es wurde ein Mischschlamm verwendet, der auch in den Vergleichsbeispielen 1 und 2 eingesetzt wurde. Der Feststoffgehalt des eingedickten Schlamms betrug 8,9%, der organische Anteil am Schlammfeststoff 65,3%.

Die Schlammvorbehandlung mit den organischen Flockungsmitteln und den Zuschlagstoffen erfolgte nach Methode A. Die Druckfiltration wurde, wie bei den Vergleichsversuchen 1 und 2 angegeben, durchgeführt.

Als Flockungsmittellösung wurde eine 0,2%ige wäßrige Lösung eines Flockungsmittelgemisches eingesetzt, das aus gleichen Teilen eines organischen Flockungsmittels mit 40%iger kationischer

0 053 251

Modifizierung und eines organischen Flockungsmittels mit 90%iger kationischer Modifizierung besteht, verwendet. Die gesamte Zugabemenge an organischen Flockungsmitteln betrug 6,0 g Wirkstoff/kg STS.

Als Zuschlagstoffe wurden Siebfraktionen mit Korngrößen kleiner als 1 mm von Grünkoks aus einer Raffinerie (Beispiel 6) und von einer Kraftwerkskohle (Beispiel 7) verwendet. Das Mengenverhältnis von STS zu KTS betrug 1 : 1,3.

Die Heizwerte des Trockenstoffs der feinteiligen Kohlen betragen:

Grünkoks, $H_U$:
35 100 kJ/kg (8400 kcal/kg)
Kraftwerkskohle, $H_U$:
29 700 kJ/kg (7100 kcal/kg)

Daten der Preßkuchen

| | Beispiel 6 (Grünkoks) | Beispiel 7 (Kraftwerkskohle) |
|---|---|---|
| Feststoffgehalt (%): | 59,6 | 58,8 |
| spez. Wassergehalt (kg) Wasser/kg STS): | 1,56 | 1,61 |
| Heizwert, $H_U$ (kJ/kg): | 14 638 | 12 590 |
| (kcal/kg): | 3502 | 3012 |

Die Beispiele 6 und 7 zeigen, daß Grünkoks und Kraftwerkskohle ebenso als feinteilige Kohlen bei dem erfindungsgemäßen Verfahren eingesetzt werden können.

Vergleichsbeispiel 3

Bei der Durchführung des Beispiels 1 wurde dem geflockten und konditionierten Schlamm, der aus einem Sammelbehälter mit Hilfe einer Kolbenmembranpumpe in eine Kammerfilterpresse gefördert wurde, vor und nach der Pumpe eine Probe entnommen. Als Zeitpunkt wurde gewählt, als der Preßdruck 15 bar erreicht hatte.

Danach wurden die Proben im Labor der Druckfiltration auf einer Laborpresse unterworfen. Es wurde 1 Minute lang bei wachsendem Druck und 2 Minuten bei einem konstanten Druck von 10 bar entwässert.

Zum Vergleich wurde ein nicht erfindungsgemäßes Flockungsgemisch eingesetzt, das aus einem Teil eines organischen Flockungsmittels mit 70%iger kationischer Modifizierung und aus 2 Teilen eines organischen Flockungsmittels mit 90%iger kationischer Modifizierung bestand. Sonst wurde wie in Beispiel 1 beschrieben verfahren.

Die Probenahme und die Überprüfung auf der Laborpresse erfolgte unter vergleichbaren Bedingungen wie oben aufgeführt.

Feststoffgehalt der Preßkuchen (Laborpresse)

| | Ort der Probenahme: vor Pumpe | nach Pumpe |
|---|---|---|
| Beispiel 1 (mit einem erfindungsgemäßen Flockungsmittelgemisch) | 54,8% | 54,1% |
| Vergleichsbeispiel 3 (mit einem nicht erfindungsgemäßen Flockungsmittelgemisch) | 53,2% | 43,8% |

Dieses Vergleichsbeispiel zeigt die hohe mechanische Belastbarkeit der Schlammflocken, die bei Verwendung des erfindungsgemäßen Flockungsmittelgemisches und bei Anwendung der erfindungsgemäßen Verfahrensweise entstehen.

9

## Patentansprüche

1. Mehrstufiges Verfahren zum Entwässern von Klärschlamm, deren organischer Anteil am Schlammfeststoff weniger als 70% beträgt und deren Entwässerungsverhalten durch Zugabe organischer Flockungsmittel verbessert worden ist, auf einer Filterpresse unter Verwendung inerter Zuschlagstoffe, dadurch gekennzeichnet, daß man die Klärschlämme durch einen Zusatz organischer Flockungsmittel bereits bei der Eindickung durch Schwerkraftsedimentation von 0,5 bis 5,0 Gew.-% Schlammfeststoff bis in den Bereich von 6 bis 14 und insbesondere 8 bis 12 Gew.-% Schlammfeststoff aufkonzentriert, die Klärschlämme mit Zuschlagstoffen, wie feinteiligen Kohlen oder Aschen oder deren Gemischen, in einer Menge von 0,5 bis 1,5 Gewichtsteilen je Gewichtsteil Schlammfeststoff vermischt, die Klärschlämme vor, während oder nach dem Einmischen der Zuschlagstoffe mit weiteren Mengen im Bereich von 2 bis 8 kg organischer Flockungsmittel/t Schlammfeststoff behandelt und dann auf der Filterpresse zur Herstellung von Filterkuchen, die unter Wärmenutzung verbrannt werden können, entwässert.

2. Verfahren nach Anspruch 1, dadurch gekennzeichnet, daß die Behandlung der Klärschlämme mit weiteren Mengen organischer Flockungsmittel vor dem Einmischen der Zuschlagstoffe vorgenommen wird, und zwar in der Weise, daß die Klärschlämme in einem Rührbehälter innerhalb von 1 bis 3 Minuten bei Rührerdrehzahlen von 5 bis 50 min$^{-1}$ mit der Flockungsmittel-Lösung vermischt werden.

3. Verfahren nach Anspruch 1, dadurch gekennzeichnet, daß die Behandlung der Klärschlämme mit weiteren Mengen organischer Flockungsmittel vor dem Einmischen der Zuschlagstoffe vorgenommen wird, und zwar in der Weise, daß die Klärschlämme in statischen Rohrmischern, die in ihrem Innern Wendeln besitzen, in weniger als 1 Minute mit der Flockungsmittellösung in Kontakt gebracht werden.

4. Verfahren nach Anspruch 1, dadurch gekennzeichnet, daß die Behandlung der Klärschlämme mit weiteren Mengen organischer Flockungsmittel gleichzeitig mit dem Einmischen der Zuschlagstoffe in einem Mischer innerhalb von 1 bis 5 Minuten und bei Rüherdrehzahlen von 5 bis 50 min$^{-1}$ erfolgt.

5. Verfahren nach Anspruch 1 bis 4, dadurch gekennzeichnet, daß als organische Flockungsmittel Mischungen eingesetzt werden, die aus einem Flockungsmittel mit 30 bis 40%iger kationischer Modifizierung und aus einem Flockungsmittel mit 70 bis 90%iger kationischer Modifizierung bestehen und deren Mischungsverhältnis 1 : 3 bis 3 : 1, bevorzugt 1 : 1, beträgt.

## Claims

1. A multistage process for dewatering sewage sludges of which the sludge solids contain less than 70% of organic matter, and whose dewatering characteristics have been improved by adding organic flocculants, on a filter press, using inert additives, wherein the sewage sludges are concentrated, by adding an organic flocculant during thickening by gravity sedimentation, from 0.5—5.0% by weight of sludge solids to 6—14, and especially 8—12, % by weight of sludge solids, the sewage sludges are mixed with additives, such as finely divided coal or ash or mixtures thereof, in an amount of from 0.5 to 1.5 parts by weight per part by weight of sludge solids, and the sludges are treated, before, during or after admixture of the additives, with a further 2—8 kg of organic flocculant/tonne of sludge solids and are then dewatered on the filter press to produce filter cakes which can be combusted with the utilization of their calorific content.

2. A process as claimed in claim 1, wherein the treatment of the sewage sludge with further amounts of organic flocculants is effected before admixture of the additives, namely by mixing the sewage sludge with the flocculant solution in a stirred vessel in the course of from 1 to 3 minutes at stirrer speeds of from 5 to 50 r.p.m.

3. A process as claimed in claim 1, wherein the treatment of the sewage sludge with further amounts of organic flocculants is effected before admixture of the additives, namely by bringing the sewage sludge into contact with the flocculant solution in the course of less than 1 minute in static tube mixers which possess spirals in their interior.

4. A process as claimed in claim 1, wherein the treatment of the sewage sludge with further quantities of organic flocculants is effected simultaneously with admixture of the additives in a mixer in the course of from 1 to 5 minutes at stirrer speeds of from 5 to 50 r. p. m.

5. A process as claimed in claims 1 to 4, wherein the organic flocculants employed are mixtures, in a ratio of from 1 : 3 to 3 : 1, preferably of 1 : 1, of a flocculant which is 30—40% cationically modified and a flocculant which is 70—90% cationically modified.

## Revendications

1. Procédé en plusieurs stades pour la déshydratation sur un filtre-presse, avec utilisation de fondant inerte, des boues de clarification dont la partie organique des matières solides est inférieure à 70% et dont le comportement à la déshydratation a été amélioré par addition de floculant organique, caractérisé par le fait qu'on

— concentre déjà les boues de clarification, par addition de floculant organique, lors de l'épaississement par sédimentation par gravité, de 0,5 à 5,0% en poids de la partie solide de la boue jusque dans les limites de 6 à 14, et en particulier de 8 à 12%, en poids de solide des boues,

— on mélange les boues de clarification avec du fondant, tel que du charbon finement divisé ou des cendres ou leur mélange, en proportions de 0,5 à 1,5 parties en poids par partie en poids de partie solide des boues,

— on traite les boues de clarification, avant, pendant ou après l'introduction par mélange du fondant, avec de nouvelles quantités, dans les limites de 2 à 8 kg, de floculant organique/t de parties solides des boues,

— puis on déhydrate sur le filtre-presse pour la fabrication de tourteaux, qui peuvent être brûlés en utilisant de la chaleur.

2. Procédé selon la revendication 1, caractérisé par le fait que le traitement des boues de clarification avec de nouvelles quantités de floculant organique est effectué avant l'introduction par mélange du fondant, et ce, en mélangeant les boues de clarification avec la solution de floculant, dans un récipient à agitateur en l'espace de 1 à 3 minutes, avec une vitesse de rotation de l'agitateur de 5 à 50 min$^{-1}$.

3. Procédé selon la revendication 1, caractérisé par le fait que le traitement des boues de clarification avec de nouvelles quantités de floculant organique est effectué avant l'introduction par mélange du fondant, et ce, en mettant en contact les boues de clarification avec la solution de floculant, en moins de 1 minute, dans des mélangeurs statiques à tube munis à l'intérieur d'hélices.

4. Procédé selon la revendication 1, caractérisé par le fait que le traitement des boues de clarification avec de nouvelles quantités de floculant organique est effectué simultanément à l'introduction par mélange du fondant, dans un mélangeur, en l'espace de 1 à 5 minutes et avec une vitesse de rotation de l'agitateur de 5 à 50 min$^{-1}$.

5. Procédé selon l'une des revendications 1 à 4, caractérisé par le fait qu'on introduit, comme floculant organique, des mélanges qui sont constitués d'un floculant à modification cationique de 30 à 40% et d'un floculant à modification cationique de 70 à 90% et dont le rapport de mélange est de 1/3 à 3/1, de préférence 1/1.